# EUROPÄISCHE PATENTANMELDUNG

(11) **EP 4 181 496 A1**
(43) Veröffentlichungstag der Anmeldung: **17.05.2023**
(21) Anmeldenummer: 21208085.7
(22) Anmeldetag: 12.11.2021
(51) Int. Cl.: H04N 1/60

(54) **VERFAHREN ZUR ERSTELLUNG VON KORREKTURDATEN FÜR EINEN PROOFDRUCKER UND PRODUKTIONSDRUCKER, SOWIE VERFAHREN ZUR ERSTELLUNG EINES PROOFDRUCKES UND PRODUKTIONSDRUCKES**

(71) Anmelder: Akzenta Paneele + Profile GmbH, 56759 Kaisersesch (DE)
(72) Erfinder: Klemm, Markus, 33619 Bielefeld (DE); Linnenbrügger, Timo, 56812 Cochem (DE); Hannig, Hans-Jürgen, 51427 Bergisch Gladbach (DE)
(74) Vertreter: Michalski Hüttermann & Partner Patentanwälte mbB

(57) **Zusammenfassung**

Die vorliegende Erfindung schlägt ein Verfahren zur Erstellung von Korrekturdaten für einen Proofdrucker vor, umfassend zumindest die folgenden Schritte: a) Bereitstellen eines digitalen Testbildes; b) Erstellen von Druckdaten für den Proofdrucker aus dem digitalen Testbild unter Anwendung eines Proofdrucker-Farbprofils; c) Erzeugung eines Test-Proofdruckes mit dem Proofdrucker auf Basis der erstellten Druckdaten; d) Bestimmung von Farbabweichungen des Test-Proofdruckes von der Farbigkeit eines Test-Produktes, wobei das Test-Produkt zumindest ein Testbild umfasst, das mit dem Produktionsdrucker auf Basis von Druckdaten gedruckt wurde, die aus dem digitalen Testbild unter Anwendung des Produktionsdrucker-Farbprofils erstellt wurden; und e) Erstellen von Korrekturdaten für den Proofdrucker auf Basis der bestimmten Farbabweichungen. Ferner schlägt die Erfindung ein Verfahren zur Erstellung eines Proofdruckes, ein Verfahren zur Erstellung von Korrekturdaten für einen Produktionsdrucker und ein Verfahren zum Drucken eines vorgegebenen Digitalbildes für ein Produkt mit einem Produktionsdrucker vor.

## Beschreibung

Die vorliegende Erfindung betrifft ein Verfahren zur Erstellung von Korrekturdaten für einen Proofdrucker, ein Verfahren zur Erstellung eines Proofdruckes, ein Verfahren zur Erstellung von Korrekturdaten für einen Produktionsdrucker und ein Verfahren zum Drucken eines vorgegebenen Digitalbildes für ein Produkt mit einem Produktionsdrucker

Verfahren zum Erstellen von Korrekturdaten für einen Proofdrucker, zur Erstellung eines Proofdruckes, zur Erstellung von Korrekturdaten für einen Produktionsdrucker und zum Drucken eines vorgegebenen Digitalbildes für ein Produkt mit einem Produktionsdrucker sind an sich bekannt.

Bei der Produktion von Produkten, die ein in irgendeiner Weise gestaltetes Bild aufweisen, das mit einem Drucker in einem Produktionsprozess aufgebracht wird, ist es wünschenswert den Großteil an notwendigen Korrekturen, insbesondere farbliche Korrekturen, vornehmen zu können, bevor das Produkt im Rahmen der Produktion auf der Produktionsmaschine und insbesondere dem Produktionsdrucker gefertigt wird. Hierfür hat es sich etabliert sogenannte Proofdrucker zu verwenden, die üblicherweise deutlich kleiner sind als die bei der Produktion verwendeten Produktionsdrucker und insbesondere nicht in eine Produktionsstraße eingebaut sind. Die Proofdrucker sollen dabei möglichst die bei der Produktion erhaltene Farbigkeit des Produktes vorhersagen bzw. simulieren. Hierfür werden mit dem Proofdrucker Farbprofile verwendet, die an den Produktionsdrucker und das Produkt derart angepasst sind, dass ein Proofdruck möglichst genau das Produktionsdruckergebnis simuliert. Abweichungen von gewünschten Farbergebnis können so bereits beim Proofdruck zu erkennen sein und beim Test auf dem Produktionsdrucker bereits im Farbprofil als Korrektur berücksichtigt werden. Somit wird versucht die Notwendigkeit aufwändiger und kostenintensiver Anpassungen des Produktionsdruckes zu reduzieren.

Ein Problem derartiger Proofdrucker ist es jedoch, dass Korrekturen mit herkömmlichen Proofdrucken selbst für einfache Produkte häufig nicht ausreichend sind, um Korrekturen am Produktionsdrucker völlig zu vermeiden.

Ein weiteres Problem derartiger Proofdrucker ist zudem, dass die beim Proofdruck festgestellten Farbabweichungen für besonders komplizierte Produkte die verwendeten Farbprofile normalerweise die Farbabweichungen des Produktionsdruckers überhaupt nicht ausreichend genau vorhersagen, so dass für derartige Produkte oft besonders viele Testdrucke auf der Produktionsanlage erfolgen müssen. Dies ist besonders problematisch, da gerade bei derartigen Produkten die Produktion besonders kompliziert sein kann und Testdrucke auf der Produktionsanlage besonders aufwändig sein können. Besonders groß ist dieses Problem beispielsweise bei Produkten, bei denen das Bild auf einem anspruchsvollen Druckuntergrund gedruckt werden soll und/oder das Bild nach dem Druck noch weiter behandelt wird, wie beispielsweise durch Lackieren oder Kaschieren. Besonders problematisch ist dabei der farbgetreue Druck von Bildern, die mit einer strukturierten, durchsichtigen Oberfläche beschichtet werden, wie beispielsweise bei Dekorpaneelen.

Das Erstellen und Anwenden von Korrekturdaten eines Proofdruckers bietet somit noch Verbesserungspotential. Verbesserungspotential kann sich dabei insbesondere in der Genauigkeit ergeben mit der ein Proofdrucker die Farbigkeit eines Produktes aus einem Produktionsdrucker simulieren kann, wobei insbesondere eine Anzahl notwendiger Testdrucke auf dem Produktionsdrucker reduziert werden kann.

Es ist daher die Aufgabe der vorliegenden Erfindung, ein verbessertes Verfahren zur Erstellung von Korrekturdaten für einen Produktionsdrucker bereitzustellen.

Gelöst wird diese Aufgabe durch das Verfahren zur Erstellung von Korrekturdaten für einen Proofdrucker gemäß Anspruch 1 sowie ferner durch das Verfahren zur Erstellung eines Proofdruckes nach Anspruch 8, das Verfahren zur Erstellung von Korrekturdaten für einen Produktionsdrucker nach Anspruch 11 und das Verfahren zum Drucken eines vorgegebenen Digitalbildes für ein Produkt mit einem Produktionsdrucker. Bevorzugte Ausgestaltungen der Erfindung sind in den Unteransprüchen, in der Beschreibung und in den Figuren angegeben, wobei weitere in den Unteransprüchen, in der Beschreibung oder den Figuren beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Mit der Erfindung wird ein Verfahren zur Erstellung von Korrekturdaten für einen Proofdrucker vorgeschlagen, wobei der Proofdrucker dafür vorgesehen ist die Farbigkeit eines Produktes zu simulieren, welches zumindest ein Bild umfasst, das mit einem Produktionsdrucker auf Basis von Druckdaten gedruckt wird, die aus einem vorgegebenen Digitalbild unter Anwendung eines Produktionsdrucker-Farbprofils erstellt werden,
wobei das Verfahren zumindest die folgenden Schritte umfasst:
a) Bereitstellen eines digitalen Testbildes;
b) Erstellen von Druckdaten für den Proofdrucker aus dem digitalen Testbild unter Anwendung eines Proofdrucker-Farbprofils;
c) Erzeugung eines Test-Proofdruckes mit dem Proofdrucker auf Basis der erstellten Druckdaten;
d) Bestimmung von Farbabweichungen des Test-Proofdruckes von der Farbigkeit eines Test-Produktes, wobei das Test-Produkt zumindest ein Testbild umfasst, das mit dem Produktionsdrucker auf Basis von Druckdaten gedruckt wurde, die aus dem digitalen Testbild unter Anwendung des Produktionsdrucker-Farbprofils erstellt wurden; und
e) Erstellen von Korrekturdaten für den Proofdrucker auf Basis der bestimmten Farbabweichungen.

Unter einem Drucker wird im Sinne der vorliegenden Erfindung insbesondere eine Vorrichtung verstanden, die farbige Druckpunkte auf einem Substrat ausgeben kann, und so ein entsprechendes Bild ausbilden kann.

Unter einem Proofdrucker wird im Sinne der vorliegenden Erfindung insbesondere ein Drucker verstanden, der im Vergleich zu einem Produktionsdrucker mit weniger Aufwand betrieben werden kann und dem Erstellen von Proofdrucken dient.

Unter einem Produktionsdrucker wird im Sinne der vorliegenden Erfindung insbesondere ein Drucker verstanden, der für die Herstellung eines Produktes verwendet wird und dabei beispielsweise in eine Produktionsstraße eingebunden ist. Unter einem Produktionsdrucker kann im Sinne der vorliegenden Erfindung allgemein auch ein Drucker verstanden werden, der nicht der selbe Drucker ist wie der Proofdrucker, insbesondere nicht der gleiche Drucker wie der Proofdrucker. Es versteht sich, dass entsprechend die Verfahren im Sinne der vorliegenden Erfindung im allgemeinen für beliebige Druckerpaare angewendet werden können, wobei ein Drucker als Proofdrucker und ein Drucker als Produktionsdrucker fungiert.

Unter dem Simulieren der Farbigkeit eines Produktes wird im Sinne der vorliegenden Erfindung verstanden, dass die Farbtöne des gedruckten Bildes des Produktes nach Fertigstellung des Produktes möglichst genau erstellt werden können, ohne dass die gleichen Produktionsschritte angewendet werden müssen wie zur Erstellung des Produktes notwendig. Indem der Proofdrucker die Farbigkeit des Produktes simuliert wird entsprechend ein Bild erstellt, dass möglichst die gleiche Farbigkeit aufweisen soll, wie das Bild in dem fertigen Produkt.

Unter einem Proofdrucker-Farbprofil oder Produktionsdrucker-Farbprofil wird im Sinne der vorliegenden Erfindung ein Profil verstanden, dass angepasst an den entsprechenden Drucker das bereitgestellte zu druckende Digitalbild so verarbeitet, dass das gedruckte Bild möglichst genau dem gewünschten Druckergebnis entspricht. Dabei kann das Produktionsdrucker-Farbprofil an den Produktionsdrucker und insbesondere auch an das Produkt angepasst sein. Das Proofdrucker-Farbprofil kann an den verwendeten Proofdrucker, den zu simulierenden Produktionsdrucker und das zu simulierende Produkt angepasst sein.

Unter dem Erzeugen von Druckdaten wird im Sinne der vorliegenden Erfindung das Umwandeln eines Digitalbildes in von dem Drucker zu verarbeitende Daten verstanden.

Unter einem Digitalbild wird im Sinne der vorliegenden Erfindung insbesondere ein digital speicherbares Bild verstanden, dessen Bildinformationen über Bildpunkte bestimmt sind, die jeweils einen Farbwert bezüglich eines Farbsystems aufweisen. Ein vorgegebenes Digitalbild ist im Sinne der vorliegenden Erfindung ein Digitalbild das zum Drucken für ein Produkt vorgesehen ist

Unter einem digitalen Testbild wird im Sinne der vorliegenden Erfindung ein Digitalbild verstanden, welches dafür vorgesehen ist einen Druck zu testen.

Unter dem Bestimmen von Farbabweichungen wird im Sinne der vorliegenden Erfindung insbesondere verstanden, dass die Farbwerte von übereinstimmenden Punkten zweier Bilder miteinander verglichen werden, insbesondere durch Bestimmen eines Farbabstandes der Farbwerte, besonders als Delta E.

Unter dem Erstellen von Korrekturdaten wird im Sinne der vorliegenden Erfindung insbesondere das Erstellen von Daten verstanden, die für einzelne Farbwerte im Farbraum Korrekturwerte umfassen, basierend auf einer Farbabweichung zu dem erwarteten Farbwert.

Durch das vorbeschriebene Verfahren kann vorteilhafterweise erreicht werden, dass die Korrekturwerte für den Proofdrucker besonders gut an Proofdrucker, Produktionsdrucker, vorgegebenes Digitalbild und Produkt angepasst sind, wodurch insbesondere eine Genauigkeit der Simulation mit dem Proofdrucker verbessert werden kann und im Ergebnis vor einem Produktionsdruck bessere Korrekturdaten für den Produktionsdrucker bereitgestellt werden können, so dass weniger Testdrucke am Produktionsdrucker notwendig sein können.

Bevorzugt kann vorgesehen sein, dass das Proofdrucker-Farbprofil bereits an das Produkt angepasst ist, besonders bevorzugt auch an den Proofdrucker, den Produktionsdrucker und das Produktionsdrucker-Farbprofil. Darunter ist zu verstehen, dass das Proofdrucker-Farbprofil schon grobe, bzw. üblicherweise verwendete Korrekturen umfasst. Beispielsweise kann das Proofdrucker-Farbprofil ein ICC-Farbprofil umfassen.

Bevorzugt kann vorgesehen sein, dass die Korrekturdaten Korrekturwerte für einzelne Farbwerte des vorgegebenen Digitalbildes umfassen, besonders bevorzugt Korrekturwerte für Farbwerte, die in dem vorgegebenen Digitalbild besonders häufig vorkommen. Bevorzugt kann vorgesehen sein, dass die Korrekturdaten Korrekturwerte für Farbwerte des vorgegebenen Digitalbildes umfassen, die den Farbraum des vorgegebenen Digitalbildes besonders gut abdecken, insbesondere repräsentativ. Dadurch kann erreicht werden, dass die Korrekturdaten besonders gut für das vorgegebene Digitalbild geeignet sind. Somit kann eine besonders gute Simulation des Druckergebnisses erhalten werden.

In einer Ausgestaltung kann vorgesehen sein, dass die Korrekturdaten Korrekturwerte für alle Farbwerte des vorgegebenen Digitalbildes umfassen.

Bevorzugt kann vorgesehen sein, dass die Korrekturdaten Informationen über das Produkt umfassen, insbesondere Informationen über den Druckuntergrund des Bildes und/oder die Nachbehandlung des Produktes nach dem Drucken des Bildes, insbesondere mögliche Kalandrier-, Lackier-, und/oder Strukturier-Schritte. Dadurch kann erreicht werden, dass die Korrekturdaten auch gut für andere bzw. ähnliche vorgegebene Digitalbilder verwendet werden können, sofern das Produkt an sich ähnlich ist. Dadurch kann insbesondere erreicht werden, dass nicht für jedes Produkt neue Korrekturdaten für den Proofdrucker erstellt werden müssen.

Bevorzug kann vorgesehen sein, dass die Korrekturdaten auch Korrekturwerte für Farbwerte umfassen, die nicht auf Basis der bestimmten Farbabweichungen erstellt wurden, wobei diese Korrekturwerte insbesondere durch Interpolation zwischen Farbwerten und den dazugehörigen Korrekturwerten erhalten werden. Dadurch kann erreicht werden, dass Korrekturdaten aus einem Test-Proofdruck auf andere vorgegebene Digitalbilder übertragen werden können.

Bevorzugt kann vorgesehen sein, dass das Test-Produkt im Wesentlichen nach dem gleichen Verfahren hergestellt wurde wie das Produkt für dessen Simulation der Farbigkeit der Proofdrucker vorgesehen ist, wobei statt des vorgegebenen Digitalbildes das digitale Testbild gedruckt wurde.

Dadurch kann vorteilhafterweise erreicht werden, dass die Korrekturdaten für den Proofdrucker besonders gut an das zu simulierende Produkt angepasst sind. Somit kann insbesondere die Genauigkeit der Simulation mit dem Proofdrucker verbessert werden.

Bevorzugt kann vorgesehen sein, dass das Test-Produkt durch Drucken des Testbildes mit dem Produktionsdrucker auf Basis von Druckdaten, die aus dem digitalen Testbild unter Anwendung des Produktionsdrucker-Farbprofils erstellt wurden, wobei das Testbild auf den gleichen Druckuntergrund gedruckt wird wie das entsprechende Bild bei der Produktion des Produktes.

Bevorzugt kann vorgesehen sein, dass das Test-Produkt erhalten wird, wobei nach Drucken des Testbildes genau wie bei der Produktion des Produktes nach dem Drucken des Bildes weiter verfahren wird.

Besonders bevorzugt kann vorgesehen sein, dass das Test-Produkt genau nach dem gleichen Verfahren hergestellt wurde wie das Produkt für dessen Simulation der Farbigkeit der Proofdrucker vorgesehen ist, wobei statt des vorgegebenen Digitalbildes das digitale Testbild gedruckt wurde.

Dadurch kann vorteilhafterweise erreicht werden, dass die Korrekturdaten für den Proofdrucker besonders gut an das zu simulierende Produkt angepasst sind. Somit kann insbesondere die Genauigkeit der Simulation mit dem Proofdrucker verbessert werden.

Bevorzugt kann vorgesehen sein, dass das Bild des Produktes und/oder Testbild des Test-Produktes mit zumindest einer zumindest teilweise durchsichtigen Deckschicht bedeckt ist, wobei die Deckschicht bevorzugt eine Strukturierung aufweist.

Es konnte überraschenderweise gezeigt werden, dass für derartige Produkte die nach dem Verfahren erstellten Korrekturwerte eine besonders gute Verbesserung der Proofdrucke ermöglichen. Ohne an eine Theorie gebunden zu sein wird davon ausgegangen, dass bei Produkten, bei denen das Bild mit zumindest einer zumindest teilweise durchsichtigen Deckschicht bedeckt ist, wobei die Deckschicht bevorzugt eine Strukturierung aufweist, besonders schwierig mit einem Proofdrucker anhand üblicher Verfahren und mit Korrekturen über Farbprofile zu simulieren sind. Durch das vorbeschriebene Verfahren können jedoch überraschenderweise auch derartige Produkte gut mit einem Proofdruck nachgestellt werden, weswegen das vorbeschriebene Verfahren besonders große Vorteile für derartige Produkte bietet.

In einer Ausgestaltung kann vorgesehen sein, dass die zumindest teilweise durchsichtigen Deckschicht eine Verschließschutzschicht ist, insbesondere eine Verschleißschutzschicht aufweist dispergierte Partikel. Es konnte gezeigt werden, dass sich das vorbeschriebene Verfahren überraschenderweise auch für derartige Produkte eignet, die ansonsten, womöglich wegen der diffus lichtbrechenden Deckschicht, besonders schwierig zu simulieren sind.

Bevorzugt kann vorgesehen sein, dass das Produkt ein Dekorpaneel ist, vorzugsweise ein Dekorpaneel mit strukturierter Oberfläche.

Es konnte überraschenderweise gezeigt werden, dass auch für derartige Produkte die nach dem Verfahren erstellten Korrekturwerte eine besonders gute Verbesserung der Proofdrucke ermöglichen.

Bevorzugt kann vorgesehen sein, dass das digitale Testbild auf Basis des vorgegebenen Digitalbild bereitgestellt wird, wobei bevorzugt das digitale Testbild Farbfelder aufweist, die jeweils einen Farbwert aufweisen, der im vorgegebenen Digitalbild besonders häufig vorkommt.

Dadurch kann vorteilhafterweise erreicht werden, dass mit vergleichsweise wenigen Messungen besonders gute Korrekturdaten erhalten werden.

In einer bevorzugten Ausgestaltung kann vorgesehen sein, dass das digitale Testbild zumindest eine Hauptfarbe des vorgegebenen Digitalbildes umfasst. Unter einer Hauptfarbe des vorgegebenen Digitalbildes ist dabei im Sinne der vorliegenden Erfindung insbesondere ein Farbwert zu verstehen, der einen wesentlichen Anteil am Digitalbild hat.

Bevorzugt kann vorgesehen sein, dass die Hauptfarben ausgewählt werden aus den am häufigsten im vorgegebenen Digitalbild vorkommenden Farben, wobei optional zwischen mehreren Hauptfarben ein Mindestabstand im Farbraum eingehalten wird, und/oder die Hauptfarben unabhängig vom vorgegebenen Digitalbild ausgewählt werden und einen möglichst großen Abstand zwischen den Hauptfarben im Farbraum eingehalten wird. Dadurch kann erreicht werden, dass mit wenigen Hauptfarben Korrekturdaten erhalten werden können, die verschiedene vorgegebene Digitalbilder gut abdecken. Mindestabstände im Farbraum können beispielsweise über einen Delta E-Werte oder mit Hilfe eines Histogramms erreicht werden.

In einer alternativen bevorzugten Ausgestaltung kann vorgesehen sein, dass das digitale Testbild Farbwerte umfasst, die in dem vorgegebenen Digitalbild besonders häufig vorkommen. Bevorzugt kann vorgesehen sein, dass das digitale Testbild Farbwerte des vorgegebenen Digitalbildes umfasst, die den Farbraum des vorgegebenen Digitalbildes besonders gut abdeckt, insbesondere repräsentativ. In einer bevorzugten Ausgestaltung kann vorgesehen sein, dass das digitale Testbild alle Farbwerte des vorgegebenen Digitalbildes umfasst.

Bevorzugt kann vorgesehen sein, dass das Bestimmen der Farbabweichungen durch Messen der Farbwerte des Test-Proofdruckes und des Testbildes des Test-Produktes mit einem optischen Farbmessgerät erfolgt, wobei insbesondere für die Farbwerte des Test-Proofdruckes und des Testbildes des Test-Produktes dasselbe optische Farbmessgeräte verwendet wird. Entsprechend analog können auch die anderen Farbabweichungen der vorliegenden Erfindung bestimmt werden.

Dadurch kann vorteilhafterweise erreicht werden, dass die erhaltenen Korrekturdaten besonders genau auf die Drucker abgestimmt sind und Messfehler vermieden werden bzw. sich ausgleichen.

Bevorzugt kann vorgesehen sein, dass das optische Farbmessgerät ausgewählt ist aus der Gruppe bestehend aus einem Farbsensor, einem Kolorimeter, einem Spektralphotometer, einer Digitalkamera oder einem Spektraldensitometer, wobei das optische Farbmessgerät vorzugsweise auf dem gleichen Farbmodell wie der Proofdrucker und/oder Produktionsdrucker beruht.

Es konnte gezeigt werden, dass sich diese Messgeräte besonders gut eignen.

Bevorzugt kann vorgesehen sein, dass das Verfahren weiter die folgenden Schritte umfasst:
f) Erstellen eines farbkorrigierten digitalen Testbildes auf Basis des digitalen Testbildes und der Korrekturdaten für den Proofdrucker aus Schritt e); und
g) Durchführen der Schritte a) bis e) mit dem farbkorrigierten digitalen Testbild als digitales Testbild, wobei die dabei erstellten Korrekturdaten für den Proofdrucker mit den zuvor erstellten Korrekturdaten für den Proofdrucker akkumuliert werden;
wobei bevorzugt die Schritte f) und g) iterativ mehrfach hintereinander durchgeführt werden, bis die Farbabweichung in Schritt d) einen Schwellwert unterschreitet und/oder ein Minimum erreicht.

Dadurch kann vorteilhafterweise erreicht werden, dass die Korrekturwerte besonders genau sind und somit weiter eine Genauigkeit der Simulation mit dem Proofdrucker verbessert werden kann und im Ergebnis vor einem Produktionsdruck bessere Korrekturdaten für den Produktionsdrucker bereitgestellt werden können, so dass weniger Testdrucke am Produktionsdrucker notwendig sein können

Im Detail und in anderen Worten werden somit die Verfahrensschritte a) bis e) nochmals durchgeführt, wobei die bereits erhaltenen Korrekturdaten angewendet werden, indem mit ihnen das digitale Testbild an sich farbkorrigiert wird. Im Ergebnis werden neue Korrekturdaten erhalten, die wiederum mit den zuvor bestimmten Korrekturdaten akkumuliert werden, so dass immer genauere Korrekturdaten erhalten werden können, bis keine Verbesserung der Farbabweichung mehr auftritt, oder eine ausreichend gute Farbabweichung gemessen wird.

In einer bevorzugten Ausgestaltung kann vorgesehen sein, dass die mit dem Verfahren erhaltenen Korrekturdaten mit Korrekturdaten aus anderen erfindungsgemäßen Verfahren zur Erstellung von Korrekturdaten für einen Proofdrucker kombiniert werden. Darunter ist insbesondere zu verstehen, dass Korrekturdaten, die für ein digitales Testbild erhalten wurden, mit Korrekturdaten, die für ein anderes digitales Testbild erhalten wurden, kombiniert werden können. Unter dem Kombinieren von Korrekturdaten ist dabei im Sinne der vorliegenden Erfindung zu verstehen, dass die Korrekturwerte für Farbwerte aus einem ersten Verfahren um die Korrekturwerte für Farbwerte aus einem zweiten und ggf. noch weiteren Verfahren ergänzt werden, wobei beispielsweise für Farbwerte, die in mehr als einem Verfahren gemessen wurden die Korrekturwerte gemittelt werden können. Beispielsweise kann in einer Ausgestaltung auch vorgesehen sein, dass beim Kombinieren der Korrekturdaten die Korrekturdaten aus verschiedenen Verfahren geglättet werden.

Dadurch kann erreicht werden, dass eine Datenbank mit Korrekturdaten aufgebaut werden kann. Bevorzugt kann dann vorgesehen sein, dass für einen ersten Proofdruck des digitalen Testbildes Korrekturdaten aus der Datenbank verwendet werden können um ein farbkorrigiertes digitales Testbild zu erstellen, wobei das Verfahren dann ausgehend von dem farbkorrigierten digitalen Testbild durchgeführt wird. Dadurch kann erreicht werden, dass insgesamt noch weniger Test-Proofdrucke notwendig sind um ein gutes Ergebnis zu erhalten.

Besonders bevorzugt kann vorgesehen sein, dass Korrekturdaten kombiniert werden unter Berücksichtigung des vorgesehenen Produktes, wobei insbesondere Korrekturdaten kombiniert werden, für vorgesehene Produkte die mit den gleichen Produktionsschritten hergestellt werden. Darunter ist zu verstehen, dass insbesondere kombinierte Korrekturdaten erstellt werden können für Produkte, die zwar unterschiedliche Bilder auf Basis unterschiedlicher vorgegebener Digitalbilder aufweisen, ansonsten jedoch analog zueinander hergestellt werden. Dadurch kann insbesondere erreicht werden, dass die Korrekturdaten besonders übertragbar auf andere vorgegebene Digitalbilder sind, die für Produkte vorgesehen sind, die ebenfalls gleich hergestellt werden.

Mit der Erfindung wird ferner ein Verfahren zur Erstellung eines Proofdruckes zur Simulation der Farbigkeit eines Produktes vorgeschlagen, wobei das Produkt zumindest ein Bild umfasst, das mit einem Produktionsdrucker auf Basis von Druckdaten gedruckt wird, die aus einem vorgegebenen Digitalbild unter Anwendung eines Produktionsdrucker-Farbprofils erstellt werden,
wobei das Verfahren zumindest die folgenden Schritte umfasst:
i) Bereitstellen des vorgegebenen Digitalbildes;
ii) Erstellen eines ersten farbkorrigierten vorgegebenen Digitalbildes auf Basis des vorgegebenen Digitalbildes und von Korrekturdaten für den Proofdrucker, welche nach dem vorbeschriebenen Verfahren erstellt wurden;
iii) Erstellen von Druckdaten für den Proofdrucker aus dem ersten farbkorrigierten vorgegebenen Digitalbild unter Anwendung des Proofdrucker-Farbprofils; und
iv) Erzeugung des Proofdruckes mit dem Proofdrucker auf Basis der erstellten Druckdaten.

Durch das vorbeschriebene Verfahren kann vorteilhafterweise erreicht werden, dass der Proofdruck besonders gut die zu erwartenden Farbwerte des Produktes simuliert. Im Ergebnis können somit vor einem Produktionsdruck bessere Korrekturdaten für den Produktionsdrucker bereitgestellt werden können, so dass weniger Testdrucke am Produktionsdrucker notwendig sein können.

In anderen Worten wird nach dem vorbeschriebenen Verfahren also ein Proofdruck des vorgegebenen Digitalbildes hergestellt, wobei die nach zumindest einem vorbeschriebenen Verfahren aus Schritt e) erhaltenen Korrekturdaten für den Proofdrucker auf Basis eines digitalen Testbildes erhalten wurde.

Bevorzugt kann vorgesehen sein, dass das vorgegebene Digitalbild durch Scannen und/oder Fotografieren eines Gegenstands erstellt wurde.

Dadurch kann vorteilhafterweise erreicht werden, dass die Farbabweichung auch anhand des Gegenstandes ermittelt werden kann.

Mit der Erfindung wird ferner ein Verfahren zur Erstellung von Korrekturdaten für einen Produktionsdrucker vorgeschlagen, wobei der Produktionsdrucker dafür vorgesehen ist ein Bild, welches Teil eines Produktes ist, auf Basis von Druckdaten zu drucken, die aus einem vorgegebenen Digitalbild unter Anwendung eines Produktionsdrucker-Farbprofils erstellt werden,
wobei das Verfahren zumindest die folgenden Schritte umfasst:
A) Erstellen von zumindest einem Proofdruck nach dem vorbeschriebenen Verfahren;
B) Bestimmung von Farbabweichungen des Proofdruckes von der Farbigkeit des vorgegebenen Digitalbildes; und
C) Erstellen von ersten Korrekturdaten für den Produktionsdrucker auf Basis der bestimmten Farbabweichungen.

Durch das vorbeschriebene Verfahren kann vorteilhafterweise erreicht werden, dass die Korrekturdaten für den Produktionsdrucker besonders genau sind, so dass weniger Testdrucke am Produktionsdrucker notwendig sein können.

In anderen Worten wird nach dem vorbeschriebenen Verfahren also Korrekturdaten für den Produktionsdrucker auf Basis von Farbabweichung eines erfindungsgemäß hergestellten Proofdruckes von dem vorgegebenen Digitalbilde erstellt.

Bevorzugt kann vorgehen sein, dass das Verfahren weiter die folgenden Schritte umfasst:
D) Erstellen eines zweiten farbkorrigierten vorgegebenen Digitalbildes auf Basis des ersten farbkorrigierten vorgegebenen Digitalbildes und der ersten Korrekturdaten für den Produktionsdrucker aus Schritt C); und
E) Durchführen der Schritte A) bis C) mit dem zweiten farbkorrigierten vorgegebenen Digitalbild aus Schritt D) als erstes farbkorrigiertes vorgegebenes Digitalbild, wobei die dabei erstellten ersten Korrekturdaten für den Produktionsdrucker mit den zuvor erstellten ersten Korrekturdaten für den Produktionsdrucker akkumuliert werden,
wobei bevorzugt die Schritte D) und E) iterativ mehrfach hintereinander durchgeführt werden, bis die Farbabweichung in Schritt B) einen Schwellwert unterschreitet und/oder ein Minimum erreicht.

Dadurch kann vorteilhafterweise erreicht werden, dass die Korrekturdaten für den Produktionsdrucker ganz besonders genau sind, so dass noch weniger Testdrucke am Produktionsdrucker notwendig sein können.

In anderen Worten kann vorgesehen sein, dass die aus dem Verfahren erhaltenen ersten Korrekturdaten für den Produktionsdrucker für einen weiteren Proofdruck angewendet werden, wobei die Korrekturdaten für den Proofdrucker auf das bereits mit den Korrekturdaten für den Proofdrucker korrigierte erste farbkorrigierte vorgegebene Digitalbild angewendet werden.

Bevorzugt kann vorgesehen sein, dass das Verfahren weiter die folgenden Schritte umfasst:
F) Erstellen eines dritten farbkorrigierten vorgegebenen Digitalbildes auf Basis des vorgegebenen Digitalbildes und der ersten Korrekturdaten für den Produktionsdrucker aus Schritt C);
G) Erstellen von Druckdaten für den Produktionsdrucker aus dem dritten farbkorrigierten vorgegebenen Digitalbild unter Anwendung des Produktionsdrucker-Farbprofils;
H) zumindest teilweises Erstellen des Produktes umfassend ein Drucken des dritten farbkorrigierten vorgegebenen Digitalbildes mit dem Produktionsdrucker auf Basis der erstellten Druckdaten;
J) Bestimmung von Farbabweichungen des Produktes von der Farbigkeit des vorgegebenen Digitalbildes; und
K) Erstellen von zweiten Korrekturdaten für den Produktionsdrucker auf Basis der bestimmten Farbabweichungen und der ersten Korrekturdaten für den Produktionsdrucker.

Dadurch kann vorteilhafterweise erreicht werden, dass die Korrekturdaten noch genau werden.

Im in anderen Worten kann vorgesehen sein, dass ein Produktionsdruck durchgeführt wird, wobei dem Produktionsdruck das vorgegebene Digitalbild zu Grunde gelegt wird, welches mit den zuvor erhaltenen ersten Korrekturdaten für den Produktionsdrucker farbkorrigiert wird, wobei das dritte farbkorrigierte vorgegebene Digitalbild erhalten wird. Insbesondere wird in Verfahrensschritt F) nicht das erste oder zweite farbkorrigierte Digitalbild zu Grunde gelegt, weswegen keine Korrekturdaten für den Proofdrucker verwendet werden.

Bevorzugt kann vorgesehen sein, dass in Schritt H) das Produkt zumindest so weit Erstellt wird, dass eine Veränderung des Farbeindruckes des Bildes nicht mehr zu erwarten ist. Besonders bevorzugt kann vorgesehen sein, dass in Schritt H) das Produkt vollständig hergestellt wird. Dadurch kann erreicht werden, dass die bestimmten Farbabweichungen und erhaltenen Korrekturdaten für das Produkt besonders repräsentativ sind, so dass das bei einem Produktionsdruck der Farbeindruck des Produktes besonders genau dem des vorgegebenen Digitalbild entspricht.

Bevorzugt kann vorgesehen sein, dass das Verfahren weiter die folgenden Schritte umfasst:
L) Erstellen eines vierten farbkorrigierten vorgegebenen Digitalbildes auf Basis des vorgegebenen Digitalbildes und der zweiten Korrekturdaten für den Produktionsdrucker aus Schritt K);
M) Durchführen der Schritte G) bis K) mit dem vierten farbkorrigierten vorgegebenen Digitalbild aus Schritt L) als drittes farbkorrigiertes vorgegebenes Digitalbild, wobei die dabei erstellten zweiten Korrekturdaten auf Basis der bestimmten Farbabweichungen und der vorherigen zweiten Korrekturdaten erstellt werden,
wobei bevorzugt die Schritte L) und M) iterativ mehrfach hintereinander durchgeführt werden, bis die Farbabweichung in Schritt J) einen Schwellwert unterschreitet und/oder ein Minimum erreicht.

Dadurch kann vorteilhafterweise erreicht werden, dass die Korrekturdaten noch genauer werden.

In anderen Worten werden somit die Verfahrensschritte G) bis K) nochmals durchgeführt, wobei die bereits erhaltenen Korrekturdaten angewendet werden, indem mit ihnen das vorgegebenen Digitalbild weiter farbkorrigiert wird. Im Ergebnis werden neue Korrekturdaten erhalten, die wiederum mit den zuvor bestimmten Korrekturdaten akkumuliert werden, so dass immer genauere Korrekturdaten erhalten werden können, bis keine Verbesserung der Farbabweichung mehr auftritt, oder eine ausreichend gute Farbabweichung gemessen wird.

Mit der Erfindung wird ferner ein Verfahren zum Drucken eines vorgegebenen Digitalbildes für ein Produkt mit einem Produktionsdrucker vorgeschlagen, wobei das Verfahren zumindest die folgenden Schritte umfasst:
I) Bereitstellen des vorgegebenen Digitalbildes;
II) Erstellen eines farbkorrigierten vorgegebenen Digitalbildes auf Basis des vorgegebenen Digitalbildes und von Korrekturdaten für den Produktionsdrucker welche nach dem vorbeschriebenen Verfahren erstellt wurden;
III) Erstellen von Druckdaten für den Produktionsdrucker aus dem farbkorrigierten vorgegebenen Digitalbild unter Anwendung des Produktionsdrucker-Farbprofils; und
IV) Erzeugung eines Produktionsdruckes mit dem Produktionsdrucker auf Basis der erstellten Druckdaten

Durch das vorbeschriebene Verfahren kann vorteilhafterweise ein Produkt erhalten werden, dass vom Farbeindruck besonders genau dem vorgegebenen Digitalbild entspricht.

In anderen Worten wird nach dem vorbeschriebenen Verfahren also ein Produktionsdruck des vorgegebenen Digitalbildes hergestellt, wobei die nach dem vorbeschriebenen Verfahren aus Schritt C) oder K) erhaltenen Korrekturdaten für den Produktionsdrucker auf das vorgegebene Digitalbild angewendet werden.

Weitere Vorteile und vorteilhafte Ausgestaltungen der erfindungsgemäßen Verfahren werden durch die Figuren veranschaulicht und in der nachfolgenden Beschreibung erläutert. Dabei ist zu beachten, dass die Figuren nur beschreibenden Charakter haben und nicht dazu gedacht sind, die Erfindung in irgendeiner Form einzuschränken.

Es zeigen
Fig. 1 schematisch den Ablauf des erfindungsgemäßen Verfahrens zur Erstellung von Korrekturdaten für einen Proofdrucker nach einer bevorzugten Ausgestaltung,
Fig. 2 schematisch den Ablauf des erfindungsgemäßen Verfahrens zur Erstellung eines Proofdruckes nach einer bevorzugten Ausgestaltung,
Fig. 3 schematisch den Ablauf des erfindungsgemäßen Verfahrens zur Erstellung von Korrekturdaten für einen Produktionsdrucker nach einer bevorzugten Ausgestaltung, und
Fig. 4 schematisch den Ablauf des erfindungsgemäßen Verfahrens zum Drucken eines vorgegebenen Digitalbildes für ein Produkt mit einem Produktionsdrucker nach einer bevorzugten Ausgestaltung.

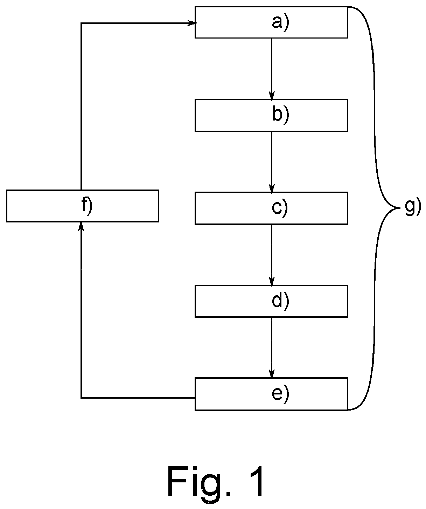

Fig. 1 zeigt schematisch den Ablauf des erfindungsgemäßen Verfahrens zur Erstellung von Korrekturdaten für einen Proofdrucker nach einer bevorzugten Ausgestaltung. Das Korrekturdaten sind dafür vorgesehen die Farbigkeit eines Produktes zu simulieren, welches zumindest ein Bild umfasst, das mit einem Produktionsdrucker auf Basis von Druckdaten gedruckt wird, die aus einem vorgegebenen Digitalbild unter Anwendung eines Produktionsdrucker-Farbprofils erstellt werden.

In einem ersten Schritt a) wird dabei ein digitales Testbild bereitgestellt. Dieses kann beispielsweise auf Basis des vorgegebenen Digitalbildes bereitgestellt werden und Farbfelder aufweisen, die jeweils einem Farbwert aufweisen, der im vorgegebenen Digitalbild besonders häufig vorkommt.

In einem weiteren Schritt b) werden dann Druckdaten für den Proofdrucker aus dem digitalen Testbild unter Anwendung eines Proofdrucker-Farbprofils erstellt. Das Proofdrucker-Farbprofil kann dabei bereits Korrekturen für den Proofdrucker umfassen, beispielsweise als ICC-Farbprofil.

Im nächsten Schritt c) wird dann ein Test-Proofdruck mit dem Proofdrucker auf Basis der erstellten Druckdaten erzeugt.

Im darauffolgenden Schritt d) werden dann Farbabweichungen des Test-Proofdruckes von der Farbigkeit eines Test-Produktes bestimmt, wobei das Test-Produkt zumindest ein Testbild umfasst, das mit dem Produktionsdrucker auf Basis von Druckdaten gedruckt wurde, die aus dem digitalen Testbild unter Anwendung des Produktionsdrucker-Farbprofils erstellt wurden. Dabei kann insbesondere das Test-Produkt im Wesentlichen nach dem gleichen Verfahren hergestellt worden sein, wie das Produkt für dessen Simulation der Farbigkeit der Proofdrucker vorgesehen ist, wobei statt des vorgegebenen Digitalbildes das digitale Testbild gedruckt wurde.

Farbabweichungen können dabei beispielsweise durch Messen der Farbwerte des Test-Proofdruckes und des Testbildes des Test-Produktes mit einem optischen Farbmessgerät erfolgt, wobei insbesondere für die Farbwerte des Test-Proofdruckes und des Testbildes des Test-Produktes dasselbe optische Farbmessgeräte verwendet wird.

In Schritt e) werden dann Korrekturdaten für den Proofdrucker auf Basis der bestimmten Farbabweichungen erstellt.

Diese Korrekturdaten können dann in Schritt f) zur Erstellung eines farbkorrigierten digitalen Testbildes verwendet werden, dass dann als digitales Testbild wieder in schritt a) bereitgestellt wird. Verfahrensschritte a) bis e) werden dann als Schritt g) mit dem farbkorrigierten digitalen Testbild als digitales Testbild erneut durchgeführt.

Insbesondere wird das Verfahren mit den Schritten f) und g) dabei so lange wiederholt, bis die Farbabweichung in Schritt e) einen Schwellwert unterschreitet oder ein Minimum erreicht.

Durch das Verfahren sind die Korrekturdaten für den Proofdrucker besonders gut dafür geeignet die Farbigkeit eines Produktes zu simulieren.

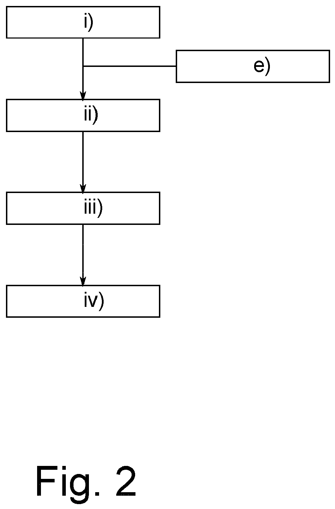

Fig. 2 zeigt schematisch den Ablauf des erfindungsgemäßen Verfahrens zur Erstellung eines Proofdruckes nach einer bevorzugten Ausgestaltung. Der Proofdruck ist zur Simulation der Farbigkeit eines Produktes vorgesehen, wobei das Produkt zumindest ein Bild umfasst, das mit einem Produktionsdrucker auf Basis von Druckdaten gedruckt wird, die aus einem vorgegebenen Digitalbild unter Anwendung eines Produktionsdrucker-Farbprofils erstellt werden.

In einem ersten Schritt i) wird das vorgegebene Digitalbild bereitgestellt. Daraufhin wird in einem Schritt ii) ein erstes farbkorrigiertes vorgegebenes Digitalbild erstellt, wobei dies auf Basis der des vorgegebenen Digitalbildes und von Korrekturdaten für den Proofdrucker erfolgt, welche nach dem erfindungsgemäßen Verfahren, wie beispielsweise dem Verfahren aus Fig. 1, erstellt wurden. Entsprechend werden die Korrekturdaten für den Proofdrucker aus Schritt e) in Schritt ii) verwendet um aus dem vorgegebenen Digitalbild das erste farbkorrigierte vorgegebene Digitalbild zu erstellen.

Im nächsten Schritt iii) werden dann Druckdaten für den Proofdrucker aus dem ersten farbkorrigierten vorgegebenen Digitalbild unter Anwendung des Proofdrucker-Farbprofils erstellt und der Proofdruck in Schritt iv) mit dem Proofdrucker auf Basis der erstellten Druckdaten erzeugt.

Durch das Verfahren weist der Proofdruck eine Farbigkeit auf, die besonders gut die Farbigkeit eines Produktes simuliert.

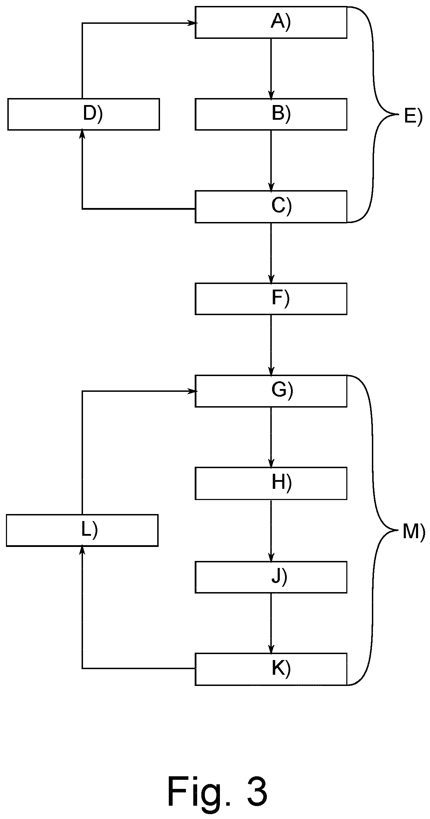

Fig. 3 zeigt schematisch den Ablauf des erfindungsgemäßen Verfahrens zur Erstellung von Korrekturdaten für einen Produktionsdrucker nach einer bevorzugten Ausgestaltung. Die Korrekturdaten sind dafür vorgesehen mit dem Produktionsdrucker ein Bild, welches Teil eines Produktes ist, auf Basis von Druckdaten zu drucken, die aus einem vorgegebenen Digitalbild unter Anwendung eines Produktionsdrucker-Farbprofils erstellt werden.

In einem ersten Schritt A) wird zumindest ein Proofdruck nach dem erfindungsgemäßen Verfahren erstellt, beispielsweise wie in Fig. 2 dargestellt. Anschließend wird in Schritt B) die Farbabweichung des Proofdruckes von der Farbigkeit des vorgegebenen Digitalbildes bestimmt. In einem weiteren Schritt C) werden dann erste Korrekturdaten für den Produktionsdrucker auf Basis der bestimmten Farbabweichungen erstellt.

In der dargestellten Ausgestaltung wird dann auf Basis dieser ersten Korrekturdaten und des ersten farbkorrigierten vorgegebenen Digitalbildes in einem Schritt D) ein zweites farbkorrigiertes vorgegebenes Digitalbild erstellt. Dieses zweite farbkorrigierte vorgegebene Digitalbild wird dann als erstes farbkorrigiertes Digitalbild als Schritt E) wieder in den Schritten A) bis C) verwendet. Die erstellten ersten Korrekturdaten für den Produktionsdrucker werden dabei mit den zuvor erstellten ersten Korrekturdaten für den Produktionsdrucker akkumuliert.

In der dargestellten Ausgestaltung werden die Schritte E) und D) dann so lange iterativ durgeführt, biss in Schritt C) die Farbabweichung einen Schwellwert unterschreitet oder ein Minimum erreicht hat.

Anschließend wird in der dargestellten Ausgestaltung von dem Proofdrucker auf den Produktionsdrucker gewechselt. Dabei wird in Schritt F) ein drittes farbkorrigiertes vorgegebenes Digitalbild auf Basis des vorgegebenen Digitalbildes (nicht auf Basis des ersten oder zweiten farbkorrigierten vorgegebenen Digitalbildes) und der ersten Korrekturdaten für den Produktionsdrucker aus Schritt C) erstellt.

Im anschließenden Schritt G) werden dann Druckdaten für den Produktionsdrucker aus dem dritten farbkorrigierten vorgegebenen Digitalbild erstellt, wobei das Produktionsdrucker-Farbprofil angewendet wird.

In einem Schritt H) wird dann zumindest teilweise das Produkt erstellt, wobei der Schritt ein Drucken des dritten farbkorrigierten vorgegebenen Digitalbildes mit dem Produktionsdrucker auf Basis der erstellten Druckdaten umfasst. In einer Ausgestaltung wird dabei das Produkt hergestellt, wie es später auch im Produktionsverfahren hergestellt wird.

In Schritt J) wird dann die Farbabweichung des Produktes von der Farbigkeit des vorgegebenen Digitalbildes bestimmt, woraufhin in Schritt K) zweite Korrekturdaten für den Produktionsdrucker auf Basis der bestimmten Farbabweichungen und der ersten Korrekturdaten für den Produktionsdrucker erstellt werden. Somit berücksichtigen die zweiten Korrekturdaten für den Produktionsdrucker die in Schritt C) erhaltenen Korrekturdaten und die durch die Schritte G) bis K) weiter verfeinerten Korrekturdaten.

In der gezeigten Ausgestaltung wird dann in einem Schritt L) ein viertes farbkorrigiertes vorgegebenes Digitalbild auf Basis des vorgegebenen Digitalbildes und der zweiten Korrekturdaten für den Produktionsdrucker aus Schritt K) erstellt.

Unter Verwendung des vierten farbkorrigierten vorgegebenen Digitalbildes als drittes vorgegebenes Digitalbild werden dann in einem Schritt M) die Schritte G) bis K) durchgeführt, wobei die in Schritt K) erstellten zweiten Korrekturdaten auf Basis der bestimmten Farbabweichungen und der vorherigen zweiten Korrekturdaten erstellt werden.

In der dargestellten Ausgestaltung werden die Schritte M) und L) dann so lange iterativ durgeführt, biss in Schritt J) die Farbabweichung einen Schwellwert unterschreitet oder ein Minimum erreicht hat.

Durch das vorbeschriebene Verfahren können besonders geringe Farbabweichungen des Produktes erreicht werden, wobei die Anzahl der Iterationen von Verfahrensschritten E) und D) vergleichsweise gering gehalten werden kann und insbesondere die Anzahl der besonders aufwändigen Iterationen der Verfahrensschritte M) und L) ganz besonders gering gehalten werden kann.

Beispielsweise können mit dem vorbeschriebenen Verfahren Korrekturdaten für farbgetreue Dekorpaneele hergestellt werden, die eine strukturierte Verschleißschutzschicht aufweisen, wobei die Schritte L) und M) weniger als 5 mal durchgeführt werden müssen, wobei mit bisher bekannten Verfahren mehr als etwa 20 Produktionsdrucke als Test notwendig sein können um zufriedenstellende Ergebnisse zu erhalten.

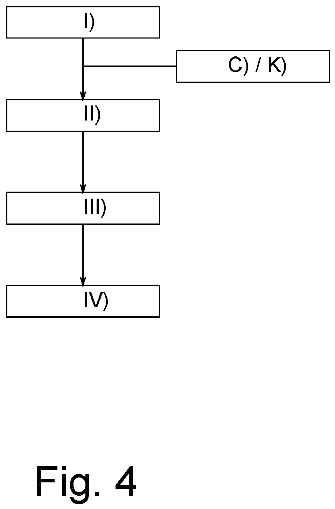

Fig. 4 zeigt schematisch den Ablauf des erfindungsgemäßen Verfahrens zum Drucken eines vorgegebenen Digitalbildes für ein Produkt mit einem Produktionsdrucker nach einer bevorzugten Ausgestaltung.

Das Verfahren umfasst in einem Schritt I) das Bereitstellen des vorgegebenen Digitalbildes. In einem Schritt II) wird dann ein farbkorrigiertes vorgegebenen Digitalbild auf Basis des vorgegebenen Digitalbildes erstellt. Dabei werden Korrekturdaten für den Produktionsdrucker verwendet, die nach dem erfindungsgemäßen Verfahren erhalten wurden. Beispielsweise werden die ersten Korrekturdaten für den Produktionsdrucker aus Schritt C), insbesondere nach erfolgter Iteration der Schritte E) und D), oder die zweiten Korrekturdaten für den Produktionsdrucker aus Schritt K), insbesondere nach erfolgter Iteration der Schritte M) und L, verwendet.

Der so erstellte Produktionsdruck weist als fertiges Produkt besonders geringe Farbabweichungen zum vorgegebenen Digitalbild auf.

## Patentansprüche

1. Verfahren zur Erstellung von Korrekturdaten für einen Proofdrucker, wobei der Proofdrucker dafür vorgesehen ist die Farbigkeit eines Produktes zu simulieren, welches zumindest ein Bild umfasst, das mit einem Produktionsdrucker auf Basis von Druckdaten gedruckt wird, die aus einem vorgegebenen Digitalbild unter Anwendung eines Produktionsdrucker-Farbprofils erstellt werden,
wobei das Verfahren zumindest die folgenden Schritte umfasst:
a) Bereitstellen eines digitalen Testbildes;
b) Erstellen von Druckdaten für den Proofdrucker aus dem digitalen Testbild unter Anwendung eines Proofdrucker-Farbprofils;
c) Erzeugung eines Test-Proofdruckes mit dem Proofdrucker auf Basis der erstellten Druckdaten;
d) Bestimmung von Farbabweichungen des Test-Proofdruckes von der Farbigkeit eines Test-Produktes, wobei das Test-Produkt zumindest ein Testbild umfasst, das mit dem Produktionsdrucker auf Basis von Druckdaten gedruckt wurde, die aus dem digitalen Testbild unter Anwendung des Produktionsdrucker-Farbprofils erstellt wurden; und
e) Erstellen von Korrekturdaten für den Proofdrucker auf Basis der bestimmten Farbabweichungen.

2. Verfahren nach Anspruch 1, wobei das Test-Produkt im Wesentlichen nach dem gleichen Verfahren hergestellt wurde wie das Produkt für dessen Simulation der Farbigkeit der Proofdrucker vorgesehen ist, wobei statt des vorgegebenen Digitalbildes das digitale Testbild gedruckt wurde.

3. Verfahren nach einem der Ansprüche 1 oder 2, wobei das Bild des Produktes und/oder Testbild des Test-Produktes mit zumindest einer zumindest teilweise durchsichtigen Deckschicht bedeckt ist, wobei die Deckschicht bevorzugt eine Strukturierung aufweist.

4. Verfahren nach einem der Ansprüche 1 bis 3, wobei das Produkt und/oder Testprodukt ein Dekorpaneel ist, vorzugsweise ein Dekorpaneel mit strukturierter Oberfläche.

5. Verfahren nach einem der Ansprüche 1 bis 4, wobei das digitale Testbild auf Basis des vorgegebenen Digitalbild bereitgestellt wird, wobei bevorzugt das digitale Testbild Farbfelder aufweist, die jeweils einen Farbwert aufweisen, der im vorgegebenen Digitalbild besonders häufig vorkommt.

6. Verfahren nach einem der Ansprüche 1 bis 5, wobei das Bestimmen der Farbabweichungen durch Messen der Farbwerte des Test-Proofdruckes und des Testbildes des Test-Produktes mit einem optischen Farbmessgerät erfolgt, wobei insbesondere für die Farbwerte des Test-Proofdruckes und des Testbildes des Test-Produktes dasselbe optische Farbmessgeräte verwendet wird.

7. Verfahren nach Anspruch 6, wobei das optische Farbmessgerät ausgewählt ist aus der Gruppe bestehend aus einem Farbsensor, einem Kolorimeter, einem Spektralphotometer, einer Digitalkamera oder einem Spektraldensitometer, wobei das optische Farbmessgerät vorzugsweise auf dem gleichen Farbmodell wie der Proofdrucker und/oder Produktionsdrucker beruht.

8. Verfahren nach einem der Ansprüche 1 bis 7, wobei das Verfahren weiter die folgenden Schritte umfasst:
f) Erstellen eines farbkorrigierten digitalen Testbildes auf Basis des digitalen Testbildes und der Korrekturdaten für den Proofdrucker aus Schritt e); und
g) Durchführen der Schritte a) bis e) mit dem farbkorrigierten digitalen Testbild als digitales Testbild, wobei die dabei erstellten Korrekturdaten für den Proofdrucker mit den zuvor erstellten Korrekturdaten für den Proofdrucker akkumuliert werden;
wobei bevorzugt die Schritte f) und g) iterativ mehrfach hintereinander durchgeführt werden, bis die Farbabweichung in Schritt d) einen Schwellwert unterschreitet und/oder ein Minimum erreicht.

9. Verfahren zur Erstellung eines Proofdruckes zur Simulation der Farbigkeit eines Produktes, wobei das Produkt zumindest ein Bild umfasst, das mit einem Produktionsdrucker auf Basis von Druckdaten gedruckt wird, die aus einem vorgegebenen Digitalbild unter Anwendung eines Produktionsdrucker-Farbprofils erstellt werden,
wobei das Verfahren zumindest die folgenden Schritte umfasst:
i) Bereitstellen des vorgegebenen Digitalbildes;
ii) Erstellen eines ersten farbkorrigierten vorgegebenen Digitalbildes auf Basis des vorgegebenen Digitalbildes und von Korrekturdaten für den Proofdrucker, welche nach dem Verfahren nach einem der Ansprüche 1 bis 8 erstellt wurden;
iii) Erstellen von Druckdaten für den Proofdrucker aus dem ersten farbkorrigierten vorgegebenen Digitalbild unter Anwendung des Proofdrucker-Farbprofils; und
iv) Erzeugung des Proofdruckes mit dem Proofdrucker auf Basis der erstellten Druckdaten.

10. Verfahren nach Anspruch 9, wobei das vorgegebene Digitalbild durch Scannen und/oder Fotografieren eines Gegenstands erstellt wurde.

11. Verfahren zur Erstellung von Korrekturdaten für einen Produktionsdrucker, wobei der Produktionsdrucker dafür vorgesehen ist ein Bild, welches Teil eines Produktes ist, auf Basis von Druckdaten zu drucken, die aus einem vorgegebenen Digitalbild unter Anwendung eines Produktionsdrucker-Farbprofils erstellt werden,
wobei das Verfahren zumindest die folgenden Schritte umfasst:
A) Erstellen von zumindest einem Proofdruck nach einem der Ansprüche 9 oder 10;
B) Bestimmung von Farbabweichungen des Proofdruckes von der Farbigkeit des vorgegebenen Digitalbildes; und
C) Erstellen von ersten Korrekturdaten für den Produktionsdrucker auf Basis der bestimmten Farbabweichungen.

12. Verfahren nach Anspruch 11, wobei das Verfahren weiter die folgenden Schritte umfasst:
D) Erstellen eines zweiten farbkorrigierten vorgegebenen Digitalbildes auf Basis des ersten farbkorrigierten vorgegebenen Digitalbildes und der ersten Korrekturdaten für den Produktionsdrucker aus Schritt C); und
E) Durchführen der Schritte A) bis C) mit dem zweiten farbkorrigierten vorgegebenen Digitalbild aus Schritt D) als erstes farbkorrigiertes vorgegebenes Digitalbild, wobei die dabei erstellten ersten Korrekturdaten für den Produktionsdrucker mit den zuvor erstellten ersten Korrekturdaten für den Produktionsdrucker akkumuliert werden,
wobei bevorzugt die Schritte D) und E) iterativ mehrfach hintereinander durchgeführt werden, bis die Farbabweichung in Schritt B) einen Schwellwert unterschreitet und/oder ein Minimum erreicht.

13. Verfahren nach einem der Ansprüche 11 oder 12, wobei das Verfahren weiter die folgenden Schritte umfasst:
F) Erstellen eines dritten farbkorrigierten vorgegebenen Digitalbildes auf Basis des vorgegebenen Digitalbildes und der ersten Korrekturdaten für den Produktionsdrucker aus Schritt C);
G) Erstellen von Druckdaten für den Produktionsdrucker aus dem dritten farbkorrigierten vorgegebenen Digitalbild unter Anwendung des Produktionsdrucker-Farbprofils;
H) zumindest teilweises Erstellen des Produktes umfassend ein Drucken des dritten farbkorrigierten vorgegebenen Digitalbildes mit dem Produktionsdrucker auf Basis der erstellten Druckdaten;
J) Bestimmung von Farbabweichungen des Produktes von der Farbigkeit des vorgegebenen Digitalbildes; und
K) Erstellen von zweiten Korrekturdaten für den Produktionsdrucker auf Basis der bestimmten Farbabweichungen und der ersten Korrekturdaten für den Produktionsdrucker.

14. Verfahren nach Anspruch 13, wobei das Verfahren weiter die folgenden Schritte umfasst:
L) Erstellen eines vierten farbkorrigierten vorgegebenen Digitalbildes auf Basis des vorgegebenen Digitalbildes und der zweiten Korrekturdaten für den Produktionsdrucker aus Schritt K);
M) Durchführen der Schritte G) bis K) mit dem vierten farbkorrigierten vorgegebenen Digitalbild aus Schritt L) als drittes farbkorrigiertes vorgegebenes Digitalbild, wobei die dabei erstellten zweiten Korrekturdaten auf Basis der bestimmten Farbabweichungen und der vorherigen zweiten Korrekturdaten erstellt werden,
wobei bevorzugt die Schritte L) und M) iterativ mehrfach hintereinander durchgeführt werden, bis die Farbabweichung in Schritt J) einen Schwellwert unterschreitet und/oder ein Minimum erreicht.

15. Verfahren zum Drucken eines vorgegebenen Digitalbildes für ein Produkt mit einem Produktionsdrucker, wobei das Verfahren zumindest die folgenden Schritte umfasst:
I) Bereitstellen des vorgegebenen Digitalbildes;
II) Erstellen eines farbkorrigierten vorgegebenen Digitalbildes auf Basis des vorgegebenen Digitalbildes und von Korrekturdaten für den Produktionsdrucker welche nach dem Verfahren nach einem der Ansprüche 11 bis 14 erstellt wurden;
III) Erstellen von Druckdaten für den Produktionsdrucker aus dem farbkorrigierten vorgegebenen Digitalbild unter Anwendung des Produktionsdrucker-Farbprofils; und
IV) Erzeugung eines Produktionsdruckes mit dem Produktionsdrucker auf Basis der erstellten Druckdaten.
